# FASCICULE DE BREVET EUROPEEN

(11) **EP 4 016 046 B1**
(45) Date de publication et mention de la délivrance du brevet: **11.09.2024**
(21) Numéro de dépôt: 21208311.7
(22) Date de dépôt: 15.11.2021
(51) Int. Cl.: G01N 1/38, B01L 9/00

(54) **DISPOSITIF DE DILUTION GRAVIMÉTRIQUE D'UN ÉCHANTILLON AVEC UNE QUANTITÉ PRÉDÉTERMINÉE DE LIQUIDE ET PROCÉDÉ CORRESPONDANT**
VORRICHTUNG ZUR GRAVIMETRISCHEN VERDÜNNUNG EINER PROBE MIT EINER VORBESTIMMTEN FLÜSSIGKEITSMENGE UND ENTSPRECHENDES VERFAHREN
DEVICE FOR GRAVIMETRIC DILUTION OF A SAMPLE WITH A PREDETERMINED AMOUNT OF LIQUID AND CORRESPONDING METHOD

(30) Priorité: 15.12.2020 FR 2013223
(43) Date de publication de la demande: 22.06.2022
(73) Titulaire: Alliance Bio Expertise, 35170 Bruz (FR)
(72) Inventeur: LE SAUX, Philippe, 35580 GUICHEN (FR)
(74) Mandataire: Vidon Brevets & Stratégie

(56) Documents cités:
- CN-U- 209 927 573
- US-A1- 2013 019 988
- US-A1- 2015 232 209

## Description

### Domaine technique

L'invention se rapporte au domaine de l'instrumentation pour les laboratoires de biologie ou de microbiologie. Plus particulièrement, l'invention porte sur un dispositif de dilution gravimétrique d'un échantillon avec une quantité appropriée de liquide. Ce type de dispositif, couramment appelé « dilueur gravimétrique » ou « diluteur gravimétrique » est employé notamment, mais non exclusivement, dans des laboratoires d'analyses biologiques de certaines industries agro-alimentaires, cosmétiques, médicales, chimiques ou pharmaceutiques.

### Art antérieur

Ces dernières années, le secteur agro-alimentaire a connu un certain nombre de crises sanitaires. Les professionnels du secteur sont désormais sensibilisés aux risques liés aux micro-organismes pathogènes sur la santé humaine et animale. Afin d'anticiper tout problème sanitaire, les laboratoires des industries agroalimentaires se sont équipés d'appareils pour réaliser des analyses microbiologiques pour contrôler la qualité des produits agro-alimentaires avant leur mise à disposition sur le marché.

Pour procéder à une analyse microbiologique d'un échantillon, il convient de préparer au préalable cet échantillon. Cette phase de préparation consiste tout d'abord à collecter divers échantillons sur le produit concerné, puis pour chaque échantillon collecté, à lui faire subir une dilution dans un sachet stérile avec un liquide adapté. Une fois la dilution effectuée, la solution obtenue est broyée, incubée et filtrée avant d'être soumise à l'analyse microbiologique à proprement parlé. Pour l'étape de dilution, les laboratoires ont généralement recours à des diluteurs gravimétriques, lesquels sont parfois logés sous une enceinte de sécurité microbiologique (typiquement une enceinte « ESB » ou « PSM »).

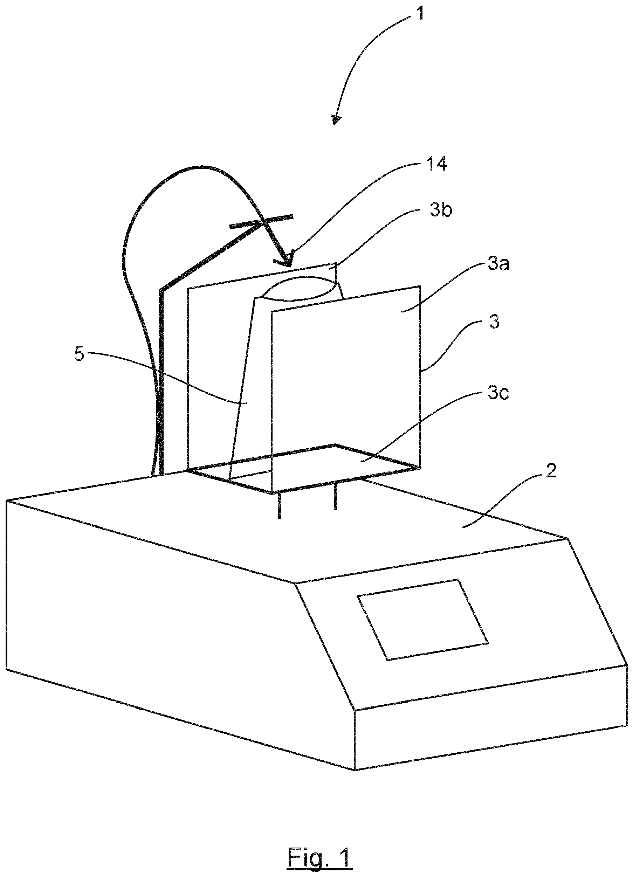

Comme illustré sur la **figure 1****,** un diluteur gravimétrique 1 comprend traditionnellement un socle 2 logeant des moyens de pesée (aussi appelés « balance »), un organe d'injection 4 d'un liquide de dilution dans un sac 5 adapté et un support de sac 3 relié aux moyens de pesée. Le support de sac ou portoir 3, se présente sous une forme générale de U ayant de deux parois latérales 3a, 3b et une paroi de fond 3c reliant les deux parois latérales. Les parois de fond et latérales définissent un volume apte à recevoir le sac 5. Les extrémités libres des parois latérales 3a et 3b (situées du côté opposé à la paroi de fond) sont conformées pour être approchées l'une de l'autre par déformation élastique (réalisée par pincement manuelle) et maintenir le sachet en position d'ouverture (après relâchement des parois latérales). Pour faciliter la mise et le maintien en position d'ouverture du sac 5, les extrémités libres du portoir 3 sont enduites d'une matière adhésive destinée à faire adhérer les bords du sac 5 au niveau de son ouverture de remplissage. Les sacs d'échantillonnage utilisés en laboratoire sont généralement réalisés à partir d'une matière polymérique souple et stérile, apte à contenir une solution liquide et/ou solide de masse variable.

L'opération de dilution gravimétrique s'effectue typiquement de la façon suivante. L'opérateur place le sac 5 verticalement dans le plan médian vertical du portoir 3, l'ouverture de remplissage en position haute. Après pincement des extrémités libres du portoir 3 pour faire adhérer les parois du sac à la matière adhésive, l'opérateur relâche les extrémités libres du portoir 3 pour qu'elles retournent dans leur position de repos, maintenant ainsi le sac 5 ouvert. Un échantillon solide est ensuite versé dans le sac 5 par l'ouverture de remplissage. Le diluteur réalise une pesée et distribue une quantité précise de liquide qui est calculée en fonction de la masse de l'échantillon introduit dans le sac. La balance effectue, de manière automatique, une pesée en continue de la masse de la solution contenue dans le sac et commande l'arrêt de la distribution lorsque la masse de solution désirée est atteinte. Le sac est ensuite refermé, et soumis à un broyage et est laissé une certaine durée au repos à une température favorisant le développement des bactéries.

La surface des parois latérales du portoir définit les dimensions du sac pouvant être reçu dans le portoir du diluteur. Pour augmenter le volume d'un sac pouvant être reçu dans le portoir, il est courant d'augmenter la surface des parois latérales du portoir. Or l'augmentation de la surface des parois latérales du portoir rend malaisées les manipulations effectuées par l'opérateur, en particulier lorsque celles-ci sont effectuées sous atmosphère contrôlée. En effet, dans ce cas, le portoir est placé sur le socle du diluteur qui lui-même est logé sous une enceinte de sécurité biologique normalisée. Cette enceinte est munie d'une ouverture centrale autorisant le passage des bras de l'opérateur pour accéder au dispositif. Or, pour éviter des sorties de produits contaminants, une telle ouverture présente une hauteur limitée qui est normalisée, amenant parfois l'opérateur à devoir se contorsionner pour effectuer ses manipulations. Augmenter les dimensions du portoir peut donc rendre les manipulations de dilution très fastidieuses.

Par ailleurs, certaines études montrent que la préparation d'échantillons représente en général environ 60% du temps de travail d'un technicien de laboratoire dans le processus d'analyse. Aussi, afin d'augmenter la productivité, une solution consisterait à réduire la durée de distribution du diluant, autrement dit à augmenter la vitesse de distribution du diluteur. Toutefois, en raison de la configuration particulière des diluteurs traditionnels, cette solution est limitée par le risque d'éclaboussures. En effet, il s'avère que plus grande est la vitesse du liquide incident entrant en contact avec la paroi du sac (laquelle est plaquée à l'une des parois latérales du porteur) et plus grande est la quantité d'éclaboussures hors du sac. En d'autres termes, augmenter la vitesse de distribution reviendrait à augmenter le risque d'écoulement accidentel de liquide en dehors du sac, ce qui causerait un manque d'hygiène et un nettoyage plus conséquent, et donc une perte de temps au final.

Il existe donc un réel besoin de proposer un dispositif de dilution gravimétrique qui soit plus ergonomique et plus rapide en termes de distribution de liquide, afin de rendre la phase de préparation d'échantillons plus productive. CN209927573, US2013019988A1 or US2015232209A1 concernent le dispositif de dilution gravimétrique tel que divulgué dans le préambule de la revendication 1.

### Résumé de l'invention

Dans un mode de réalisation particulier de l'invention, il est proposé un dispositif de dilution gravimétrique d'un échantillon dans un contenant avec une quantité prédéterminée de liquide, le contenant comprenant deux parois assemblées par des bords latéraux opposés, un fond et une ouverture de remplissage, ledit dispositif comprenant :
- des moyens d'accueil du contenant définissant un volume apte à accueillir le contenant dans une position d'ouverture ;
- des moyens d'injection configurés pour injecter le liquide dans le contenant lorsque le contenant est accueilli par les moyens d'accueil, les moyens d'injection ayant un axe d'injection dirigé vers l'ouverture de remplissage.
Un tel dispositif est caractérisé en ce que les moyens d'injection sont agencés par rapport aux moyens d'accueil de sorte qu'au cours d'une injection du liquide dans le contenant, ledit axe d'injection est dirigé vers l'un des bords latéraux du contenant de telle sorte que le liquide se déverse sensiblement sur ledit bord latéral du contenant.

Ainsi, la présente invention repose sur une nouvelle approche permettant d'optimiser les opérations distribution gravimétrique. En effet, grâce à cet agencement particulier des moyens d'injection par rapport aux moyens d'accueil, lorsqu'une quantité de liquide est déversé dans le contenant, les éclaboussures en dehors du contenant sont réduites. Ainsi, contrairement aux diluteurs traditionnels, l'axe d'injection est toujours dirigé vers un bord latéral du contenant, ce qui permet d'augmenter la vitesse de distribution du liquide, et ce quelle que soit l'orientation du contenant, sans pour autant perdre en précision de pesée. Par ailleurs, un tel dispositif est plus commode à utiliser du fait du risque réduit d'éclaboussures accidentelles de liquide hors du contenant.

Selon un aspect particulier de l'invention, les moyens d'injection sont configurés mobiles en rotation par rapport à un organe de support.

Ainsi le liquide injecté grâce aux moyens d'injection peut être dirigé sur la partie voulue du contenant. Une telle caractéristique est particulièrement intéressante sur deux points. D'une part, rendre mobiles les moyens d'injection permet d'offrir une souplesse dans le choix du sens d'orientation du contenant placé sur les moyens d'accueil : les moyens d'accueil du dispositif peuvent être en effet configurés pour que le contenant soit positionné soit parallèle à l'opérateur, soit perpendiculaire à celui-ci tout en respectant le principe général ci-dessus (axe d'injection est dirigé vers l'une des deux zones pli latérales du contenant). D'autres part, cela donne la possibilité à l'opérateur, pour toute manipulation ne nécessitant pas de distribution de liquide (préparation de l'échantillons, introduction et/ou retrait du contenant typiquement), de diriger l'axe d'injection dans une direction autre que celles visant les moyens d'accueil (et donc le contenant lorsque celui-ci est présent). Il est ainsi possible de gagner de l'espace de travail et donc de rendre les manipulations plus aisées. De plus, le fait éloigner les moyens d'injection de l'ouverture du contenant permet d'assurer une certaine protection des moyens d'injection contre les contaminations manuelles, et de réduire le risque de contaminations inter-échantillons.

Selon une mise en oeuvre particulière, le dispositif étant destiné à être logé sous une enceinte protectrice dotée d'une fenêtre d'accès définissant un plan de fenêtre, alors les moyens d'accueil définissent un plan d'accueil, dans lequel les bords latéraux du contenant sont destinés sensiblement se trouver, de sorte que le plan d'accueil est perpendiculaire au plan de fenêtre.

Ainsi, une fois le contenant disposé dans le plan d'accueil, le contenant se retrouve positionné perpendiculairement à l'opérateur, ce qui facilite grandement l'accès au dispositif ainsi qu'au contenant. Les manipulations de pesée et de dilution s'en trouve plus aisées car l'espace de travail offert de part et d'autre du contenant offre une plus grande liberté de mouvement pour les manipulations et/ou la pose d'outils sous enceinte protectrice, et en particulier sous enceinte protectrice normalisée. Cette configuration est d'autant plus intéressante qu'elle offre en outre la possibilité d'utiliser des contenants de tailles différentes sans pour autant réduire l'espace de travail utile à la préparation de l'échantillon.

Selon une configuration particulière, la fenêtre d'accès est une fenêtre d'accès frontale.

Ainsi, l'invention permet d'utiliser une enceinte standard munie d'une fenêtre frontale, celle-ci étant sensiblement perpendiculaire aux parois latérales du contenant. A titre d'alternative, plutôt qu'une fenêtre d'accès frontale, l'enceinte est dotée d'une fenêtre d'accès latérale, permettant un accès latéral au dispositif. Dans cette configuration particulière, les moyens d'accueil sont alors configurés pour que le plan d'accueil soit perpendiculaire au plan de fenêtre.

Selon une mise en oeuvre particulière de l'invention, les moyens d'accueil comprennent un réceptacle apte à supporter le contenant et une pince d'ouverture apte à maintenir le contenant dans la position d'ouverture.

Un tel réceptacle peut prendre la forme d'un plateau dont les dimensions permettent de recouvrir au moins partiellement le socle du dispositif. De cette façon, lorsque du liquide (ou une partie de l'échantillon) est déversé hors du contenant, il peut être recueilli par le réceptacle évitant de salir le dispositif, protégeant ainsi le socle. Par exemple, il peut être conformé de façon à recouvrir totalement la face supérieure du socle du dispositif. Le réceptacle peut être configuré amovible de façon à faciliter le nettoyage du dispositif.

Selon un aspect particulier, la pince d'ouverture étant solidaire du réceptacle, par exemple d'une des parois latérales de celui-ci, formant ainsi des moyens d'accueil monoblocs. Ainsi, le fait de rendre les moyens d'accueil amovibles permet non seulement de faciliter le nettoyage du dispositif, mais également la mise en place du contenant lorsque cela est effectuée hors de l'enceinte.

De façon alternative, la pince d'ouverture est non solidaire du réceptacle mais est solidaire du socle du dispositif.

Selon une variante de mise en oeuvre, les moyens d'accueil comprennent un portoir apte à accueillir le contenant et un réceptacle apte à recevoir ledit portoir, ledit portoir étant formé de deux parois latérales et d'une paroi de fond reliant les deux parois latérales, lesdites parois verticales étant conformées pour maintenir le contenant dans la position d'ouverture.

Ainsi, le dispositif selon l'invention offre la possibilité d'utiliser des portoirs traditionnels.

Selon une caractéristique particulièrement intéressante du point de vue praticité, le dispositif comprend un panier de transport amovible conformé pour transporter le contenant, ledit panier étant destiné à être placé sur une paroi de fond du réceptacle. Le portoir peut être amovible et séparable du panier.

On facilite ainsi le transport du contenant ainsi que sa mise en place sur le réceptacle du dispositif. Dans le cas où un portoir est utilisé, le panier est conformé pour transporter le portoir, lequel accueille le contenant.

Selon une caractéristique particulière, le dispositif comprend un mat télescopique à l'extrémité duquel est fixé un afficheur tête-haute et des moyens de commande dudit mat télescopique configurés pour modifier la position de l'afficheur tête-haute selon un axe vertical, ledit afficheur tête-haute étant mécaniquement relié aux moyens d'injection via l'organe de support.

Cela offre la possibilité d'ajuster l'afficheur tête-haute, et donc les moyens d'injection, en fonction de la hauteur du sac utilisé, et ainsi gagner en ergonomie. Selon un autre aspect particulier de l'invention, le dispositif comprend une pompe d'injection amovible, laquelle est reliée aux moyens d'injection et pouvant être placée à l'extérieur de l'enceinte. Ainsi, contrairement à l'art antérieur, le volume habituellement emprunté par la pompe d'injection au sein de l'enceinte est libéré pour gagner de l'espace de travail. En d'autres termes, le système gagne en compacité sous enceinte.

Dans un autre mode de réalisation particulier de l'invention, il est proposé un procédé de dilution gravimétrique d'un échantillon dans un contenant avec une quantité prédéterminée de liquide à l'aide d'un dispositif de dilution, le contenant comprenant deux parois assemblées par des bords latéraux opposés, un fond et une ouverture de remplissage, le procédé comprenant les étapes suivantes :
- disposer le contenant dans une position d'ouverture via des moyens d'accueil ;
- verser ledit échantillon dans le contenant à travers l'ouverture de remplissage ;
- injecter le liquide dans le contenant via des moyens d'injection, lesdits moyens d'injection ayant un axe d'injection dirigé vers l'ouverture de remplissage.
Le procédé est caractérisé en ce qu'il comprend une étape, effectuée préalablement à l'étape d'injection, consistant à diriger l'axe d'injection desdits moyens d'injection vers l'un des bords latéraux du contenant de sorte que les moyens d'injection injectent le liquide sensiblement sur ledit bord latéral du contenant.

Il est ainsi possible d'augmenter la vitesse de distribution du liquide dans le contenant.

### Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
Figure 1, déjà discuté plus haut, représente de façon schématique un dispositif de dilution gravimétrique de l'état de la technique ;
Figure 2 est une vue en perspective d'un dispositif de dilution gravimétrique selon un premier mode de réalisation particulier de l'invention ;
Figure 3 est une vue en perspective du dispositif illustré à la figure 2, lorsque celui-ci est logé sous une enceinte protectrice ;
Figure 4 est une vue de face du dispositif illustré à la figure 3 ;
Figure 5 est une vue en perspective d'un dispositif de dilution gravimétrique selon un deuxième mode de réalisation particulier de l'invention ;
Figure 6 est une vue latérale du dispositif illustré à la figure 5 ;
Figure 7 illustre une variante des moyens d'accueil équipant le dispositif conforme au premier mode de réalisation ;
Figure 8 est une vue de dessus du dispositif dans son premier mode de réalisation de l'invention ;
Figure 9 est une vue de dessus du dispositif dans son deuxième mode de réalisation de l'invention ;

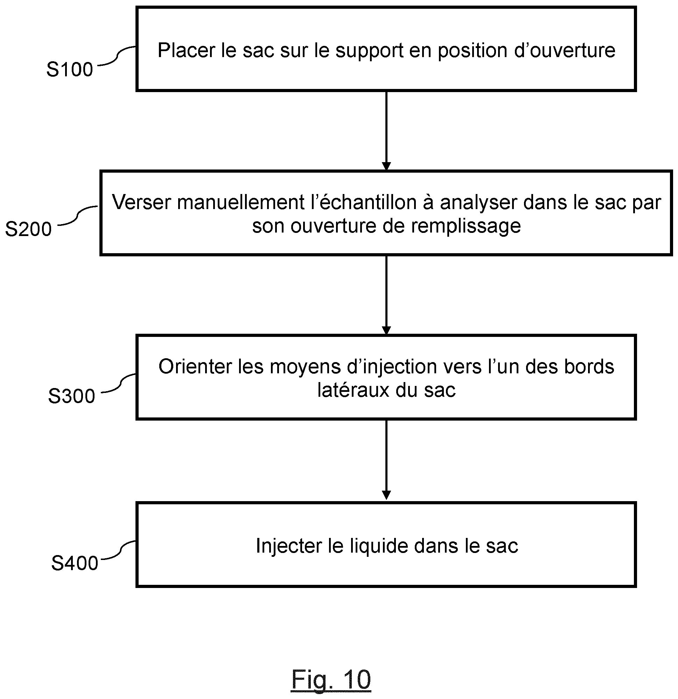

Figure 10 illustre un mode de réalisation particulier du procédé selon l'invention
Figure 11 illustre un exemple d'utilisation d'un panier de transport dans le premier mode de réalisation de l'invention.

### Description détaillée de l'invention

Sur les figures du présent document, les éléments identiques sont désignés par une même référence numérique.

Le principe général de l'invention repose sur un agencement particulier des moyens d'injection du liquide et des moyens de support du sac d'échantillonnage du dispositif pour permettre, d'une part, une distribution optimisée du liquide dans le sac, et d'autre part une facilité d'utilisation, afin de gagner en productivité lors de la phase de préparation des échantillons en laboratoire.

On s'attache plus particulièrement dans la suite de ce document à décrire l'invention dans le cadre d'un contrôle de qualité microbiologique d'un échantillon solide issu d'un produit agroalimentaire. En effet, il s'avère que la sécurité alimentaire, dont la qualité microbiologique des aliments est une composante essentielle, représente un enjeu considérable pour les industriels de l'agroalimentaire. L'invention ne se limite bien sûr pas à ce domaine particulier d'application, mais s'inscrit dans tout secteur ou toute application nécessitant une préparation d'un échantillon par dilution gravimétrique.

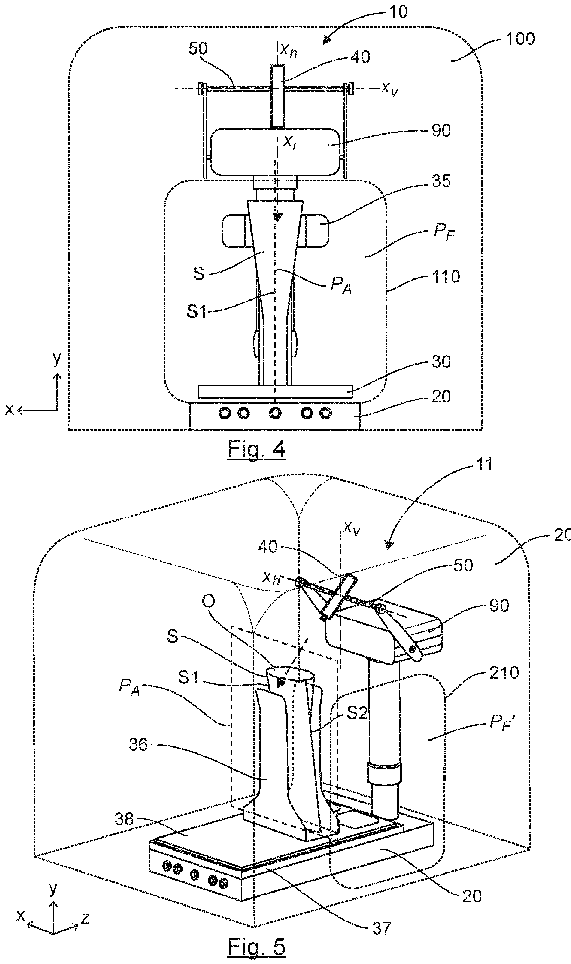

Il est proposé deux configurations particulières du dispositif : une configuration dite « en mode portrait » permettant une disposition du sac sensiblement perpendiculaire à l'opérateur et une configuration dite « en mode paysage » permettant une disposition du sac sensiblement parallèle à l'opérateur. La deuxième configuration est décrite plus loin en relation avec les figures 5, 6 et 9.

Afin de mieux appréhender le concept de la présente invention, le dispositif de l'invention (dans l'un quelconque de ses modes de réalisation) est représenté dans un système de référence X, Y, Z. Pour une meilleure lisibilité des figures, les différents plans et axes sont représentés en pointillés.

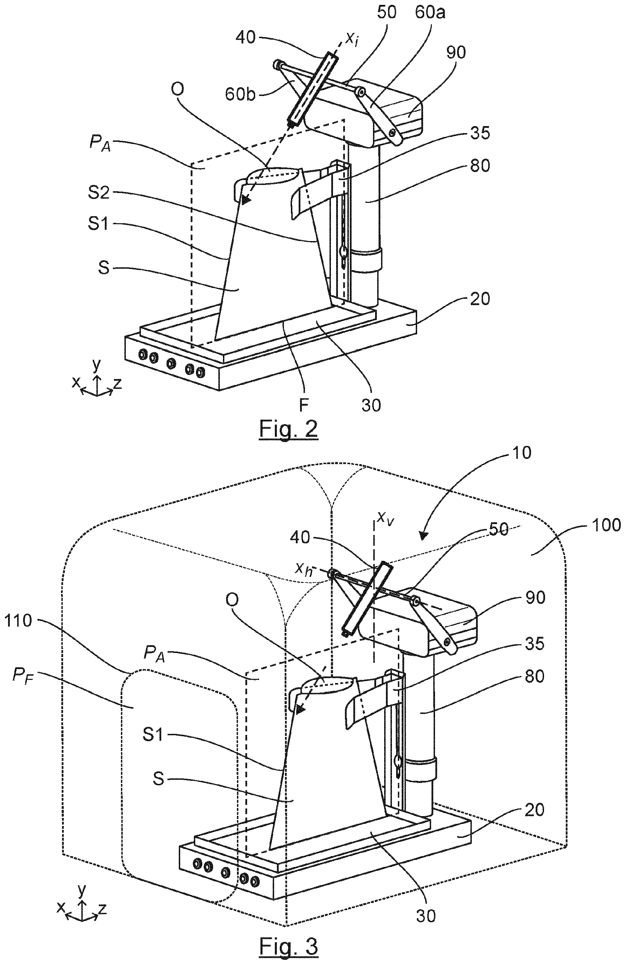

On présente maintenant, en relation avec les **figures 2, 3** **et** **4****,** un dispositif de dilution gravimétrique 10 selon un premier mode de réalisation de l'invention. Pour simplifier, le dispositif selon l'invention est par la suite appelé « diluteur ».

Le diluteur 10 selon l'invention comprend :
- un socle 20 logeant des moyens de pesée et différents composants électroniques et/ou mécaniques (non représentés) ;
- des moyens d'accueil 30 et 35 destinés à accueillir le contenant S en position d'ouverture ;
- des moyens d'injection 40 configurés pour injecter un liquide de dilution dans le contenant S selon un axe d'injection Xi à des fins de dilution de l'échantillon.

Dans l'exemple illustré ici, le contenant S est un sac d'échantillonnage stérile, réalisé à partir d'une matière souple et étanche, par exemple un film en matière plastique telle que le polyéthylène. Le sac S comprend typiquement deux parois - une paroi avant et une paroi arrière - assemblées par des bords latéraux opposés S1 et S2, un fond F et une ouverture de remplissage O.

Les moyens de pesée forment la balance du diluteur : ils sont configurés pour permettre de peser, en continu et de manière automatique, le contenant déversé dans le sac S (échantillon, liquide de dilution).

Les moyens d'accueil du diluteur 10 sont configurés pour définir un volume apte à accueillir le sac S dans une position d'ouverture permettant de recevoir le liquide. Les moyens d'accueil comprennent, dans ce premier mode de réalisation, un support 30 apte à supporter le sac S et une pince d'ouverture 35 apte à ouvrir le sac S et à le maintenir dans une position d'ouverture (c'est-à-dire avec l'ouverture O orientée vers le haut). La pince 35 comprend deux bras élastiquement flexibles et sensiblement parallèles qui s'étendent horizontalement en direction de l'opérateur (le long de l'axe Z) à partir d'une barre verticale. Les extrémités des deux bras sont enduites d'une matière adhésive destinée à faire adhérer les bords du sac S au niveau de son ouverture O, facilitant le maintien du sac S en position d'ouverture. La pince 35 est configurée mobile en translation par rapport à la barre verticale de manière à pouvoir ajuster la hauteur de la pince par rapport à la hauteur du sac S placé sur le support 30. Les dimensions de la pince sont adaptées aux dimensions du sac utilisé. Quant au support 30, il est conformé en forme de plateau pour servir de réceptacle apte à éventuellement récupérer du liquide coulant en dehors du sac S ou en l'absence de sac (en cas d'écoulement accidentel par exemple). Pour assurer cette fonction de réceptacle, le support 30 s'étend au moins sur la face supérieure du socle 20. De préférence, le contour du support 30 entoure assez largement toute la périphérie du socle 20 du dispositif. D'autre part, le support 30 est relié mécaniquement à un organe sensible des moyens de pesée configuré pour transmettre la force pesante mesurée par le diluteur 10. Dans l'exemple illustré ici, le support 30 et la pince d'ouverture 35 sont solidaires l'un de l'autre, et forment des moyens d'accueil amovibles d'un seul tenant, notamment pour faciliter le nettoyage du dispositif 10. Selon une variante, la pince d'ouverture 35 est solidaire du socle 20 du dispositif.

Les moyens d'injection 40 du diluteur 10 sont configurés pour injecter le liquide de dilution dans le sac S lorsque le contenant S est placé sur le support 30. Les moyens d'injection 40 possèdent un axe d'injection Xi dirigé vers l'ouverture O du sac. Dans le présent exemple, les moyens d'injection 40 sont constitués d'une buse d'injection et d'un système d'accroche et de réglage de celle-ci. Des moyens d'acheminement (non représentés) connectés d'une part à la buse d'injection et d'autre part à une pompe d'injection (non représentée) permettent d'acheminer le liquide de dilution depuis la pompe jusqu'à la buse d'injection.

Les moyens d'injection 40 selon l'invention sont agencés par rapport aux moyens d'accueil 30 et 35 de sorte qu'au cours d'une injection du liquide dans le sac S, l'axe d'injection Xi est dirigé vers le bord latéral S1 du sac S de telle sorte que le liquide se déverse sensiblement sur ce bord latéral du sac S. Cette partie du sac S, du fait qu'elle ne soit en contact avec aucun élément des moyens d'accueil, est relativement souple. Ainsi, dans la présente configuration en mode portrait, les moyens d'injection sont orientés de sorte que l'axe d'injection Xi s'étendent sensiblement le long des axes Y et Z.

Ainsi, lorsqu'une quantité de liquide est déversé dans le sac S, les éclaboussures en dehors du sac S sont réduites, contrairement aux diluteurs traditionnels où l'axe d'injection est dirigé vers une des parois avant ou arrière du sac. Cette approche astucieuse offre ainsi la possibilité d'augmenter la vitesse de distribution du liquide tout en limitant le risque d'éclaboussures hors contenant (et ainsi gagner en productivité).

Les figures 2 et 3 illustrent le principe de fonctionnement du diluteur 10 lorsqu'il est logé dans une enceinte protectrice standard 100, par exemple une enceinte de sécurité microbiologique de type « ESB » normalisée. Le diluteur 10 et l'enceinte 100 forment alors un système de dilution gravimétrique sécurisé selon l'invention. Une telle enceinte 100 est munie d'une fenêtre (ou ouverture) frontale 110 autorisant l'accès des bras de l'opérateur au sein de l'enceinte 100 sensiblement le long de l'axe Z. Une telle fenêtre (ou ouverture) 110 présente une hauteur et une largeur limitée (par exemple une hauteur de 18 cm et une largeur de de 120 cm pour éviter la sortie de produits contaminants.

On considère par la suite :
- le plan P_{A}, le plan des moyens d'accueil 30 et 35 correspondant à un plan médian vertical passant sensiblement par les bords latéraux S1 et S2 du sac S (lorsque le sac S est placé en position d'ouverture sur le support 30 et entre les bras de la pince 35) ;
- le plan P_{F}, le plan de la fenêtre d'accès 110.

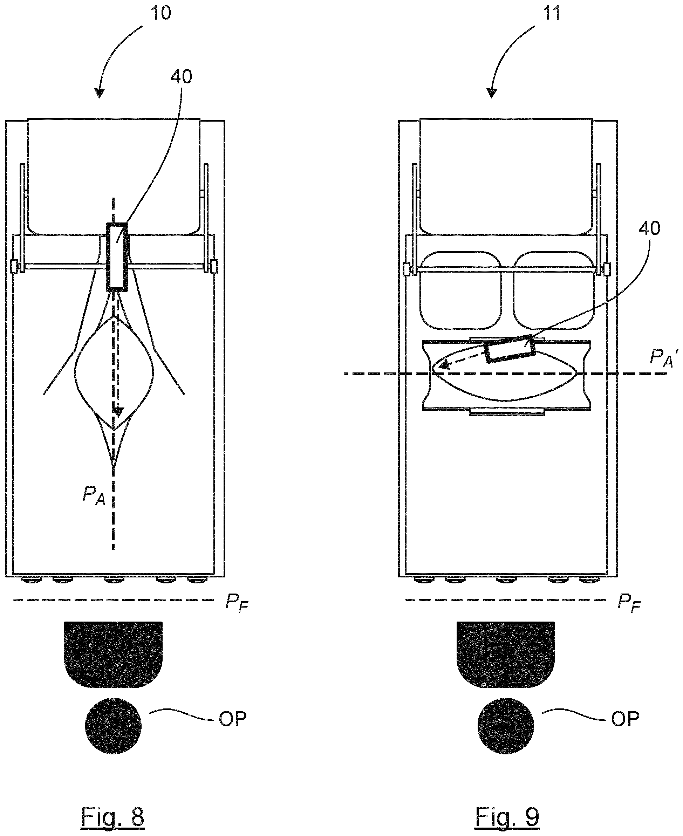

Dans ce premier mode de réalisation, les moyens d'accueil du diluteur 10 sont configurés de manière à ce que le plan d'accueil P_{A} est perpendiculaire au plan de fenêtre P_{F}. Ainsi, une fois placé sur le support 30 et entre les bras de la pince 35, le sac S (et plus précisément l'axe du sac passant par ses deux bords latéraux) se retrouve positionné (en position d'ouverture) perpendiculairement à la fenêtre d'accès 110 et donc à l'opérateur, comme illustré en figure 8. Une telle configuration permet ainsi une plus grande facilité de manipulation au sein de l'enceinte 100 (contrairement au diluteur de l'art antérieur). Les manipulations de pesée et de dilution s'en trouve plus aisées car l'espace de travail offert de part et d'autre du plan d'accueil P_{A} offre une plus grande liberté de mouvement et permet la pose éventuelle d'outils. A noter que cette configuration est d'autant plus intéressante qu'elle offre en outre la possibilité d'utiliser des sacs de formats différents tout en maintenant un espace de travail commode aux manipulations sous atmosphère contrôlée. C'est le cas des sacs de type « grand format » destinés à contenir des échantillons de masse typiquement compris entre 100 et 550 g, par comparaison aux sacs de volumes plus réduits, de type « petit format », destinés à contenir des échantillons de masse comprise entre 10 à 50 g typiquement. Ainsi, le diluteur 10 selon l'invention est donc plus commode à utiliser, en particulier sous enceinte normalisée standard.

Selon un autre aspect de l'invention, le diluteur 10 est en outre équipé d'un mat télescopique 80 à l'extrémité duquel est fixé un afficheur tête-haute 90, et de moyens de commande du mat télescopique configurés pour modifier la position de l'afficheur tête-haute 90 selon l'axe vertical défini par le mat télescopique 80. Cela offre la possibilité d'ajuster l'afficheur tête-haute 90 en fonction de la hauteur du sac utilisé, et ainsi gagner en ergonomie. Le diluteur 10 est également équipé d'une pompe d'injection amovible (non représentée) reliée aux moyens d'injection via des moyens d'acheminement, ladite pompe étant placée à l'extérieur de l'enceinte 100. Ainsi, contrairement à l'art antérieur, le volume habituellement emprunté par la pompe d'injection au sein de l'enceinte est libéré pour gagner de l'espace de travail. Le dispositif sous enceinte gagne donc en compacité. De plus, cela permet de réduire l'exposition du système de pesée aux vibrations mécaniques inhérentes de la pompe.

Selon un autre aspect de l'invention, les moyens d'injection 40 sont configurés mobiles en rotation par rapport à l'organe de support 50 selon au moins deux axes orthogonaux : un premier axe horizontal Xh s'étendant le long de l'axe X (confondu avec l'organe de support 50 et s') et un deuxième axe sensiblement vertical Xv s'étendant le long de l'axe Y, comme illustré sur les figures 3 et 4. Ainsi, le liquide injecté grâce aux moyens d'injection peut être dirigé sur la partie voulue du sac S. Une telle caractéristique est particulièrement intéressante sur deux points. D'une part, rendre mobile les moyens d'injection permet d'offrir une souplesse dans le choix de la configuration du dispositif (orientation sac S perpendiculairement ou parallèlement à l'opérateur) tout en respectant le principe général de l'invention (à savoir que l'axe d'injection Xi est orienté en direction d'un bord latéral du sac S). D'autre part, cela donne la possibilité d'orienter les moyens d'injection 40 dans une direction ne gênant pas les manipulations hors injection (introduction du sac, retrait du sac, remplissage manuel du sac avec l'échantillon, etc.). En effet, en position d'injection, la buse d'injection se situe en un point se trouvant sensiblement au-dessus du sac à une distance non-nulle de l'ouverture O du sac. Ainsi, le fait d'éloigner la buse d'injection de l'ouverture O du sac S permet d'une part de gagner davantage en espace de travail sous enceinte, et d'autre part de réduire le risque de contaminations inter-échantillons. Par ailleurs, les moyens d'injection 40 peuvent coopérer avec des moyens d'orientation de la buse aptes à orienter ladite buse selon au moins deux axes orthogonaux, tels que par exemple des moyens d'orientation comprenant une double liaison pivot ou une liaison sphérique de type rotule, sans être exhaustif. On pourrait envisager, sans sortir du cadre de l'invention, que ces moyens d'orientation coopèrent avec des moyens de pilotage pour permettre un réglage automatique de l'axe Xi des moyens d'injection 40.

Sur chaque extrémité de l'organe de support 50 est fixé un bras de portage, chaque bras de portage 60a et 60b étant lui-même fixé de manière mobile en rotation autour d'un axe sur une face latérale de l'afficheur tête-haute 90, autorisant un basculement des moyens d'injection 40 depuis une position d'injection (la buse d'injection 40 est alors disposée sensiblement vers l'avant de la tête-haute 90 comme illustré sur les figures avec la buse située sensiblement au-dessus du sac) à une position de repos (la buse d'injection 40 est alors disposée sensiblement vers l'arrière de la tête-haute 90, c'est-à-dire hors de l'espace de travail).

Un passage pour câbles peut être prévu sur l'une des faces latérales de l'enceinte protectrice, par exemple, sur la face latérale arrière pour plus de commodité, afin de permettre le passage de câbles électriques et/ou des moyens d'acheminement du liquide de dilution. A défaut, les moyens d'acheminement peuvent être disposés de manière à traverser la fenêtre d'accès de façon à autoriser la présence de la pompe d'injection à l'extérieur de ladite enceinte.

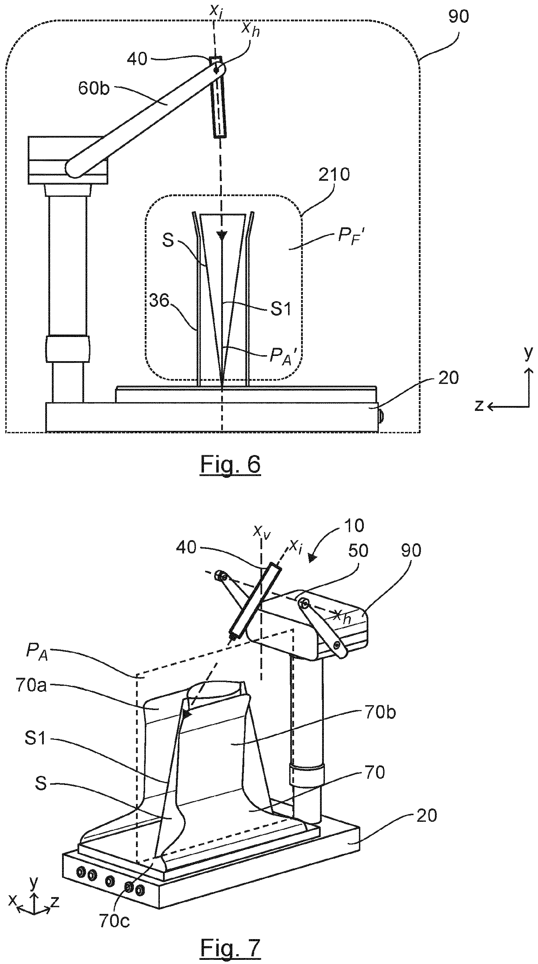

On présente maintenant, en relation avec les **figures 5** **et** **6****,** un diluteur gravimétrique 11 selon un deuxième mode de réalisation de l'invention. Le diluteur 11 est logé dans une enceinte protectrice 200, par exemple une enceinte de sécurité microbiologique normalisée. Le dispositif 11 et l'enceinte protectrice 200 forment un système de dilution gravimétrique sécurisé selon l'invention. La configuration proposée dans ce deuxième mode de réalisation est particulièrement bien adaptée, mais non exclusivement, à la distribution de liquide dans un sac petit format.

Ce deuxième mode de réalisation diffère principalement du premier mode de réalisation en ce que le sac S est positionné parallèle à l'opérateur. Cette configuration en mode paysage est particulièrement bien illustrée sur la vue de dessus de la figure 9.

Dans ce deuxième mode de réalisation, les moyens d'accueil du diluteur 11 comprennent un portoir de forme traditionnelle, référencé 36. Un tel portoir 36 est formé de deux parois latérales et d'une paroi de fond reliant les deux parois latérales, l'ensemble définissant un volume apte à accueillir le sac S dans une position d'ouverture sensiblement dans un plan P_{A}'. Le plan P_{A}' correspondant au plan médian vertical compris entre les deux parois latérales du portoir 36. Les parois verticales du portoir 36 sont conformées pour maintenir le contenant dans la position d'ouverture : elles sont élastiquement flexibles de sorte qu'elles puissent être manuellement rapprochées l'une de l'autre par déformation élastique et permettre de maintenir le sac S en position d'ouverture une fois les parois relâchées. Leur extrémité libre est enduite d'une matière adhésive destinée à faire adhérer les bords du sac S et ainsi faciliter la mise en position d'ouverture du sac S et son maintien dans cette position. Les dimensions du portoir 36 sont adaptées aux dimensions du sac utilisé.

Conformément au principe général de l'invention, les moyens d'injection 40 sont agencés par rapport au portoir 36 de sorte qu'au cours d'une injection du liquide dans le sac S, l'axe d'injection Xi est dirigé vers le bord latéral S1 du sac S de telle sorte que le liquide se déverse sensiblement sur ce bord latéral, réduisant ainsi le risque d'éclaboussures et autorisant une vitesse de distribution du liquide plus importante. De fait, le portoir 36 est disposé sur le support 37 de sorte que le plan d'accueil P_{A}' se situe le long des axes X et Y, et l'axe Xi des moyens d'injection orienté en direction du bord latéral S1, soit sensiblement le long des axes X et Y (c'est-à-dire dans le plan P_{A}').

Ainsi, comme l'axe d'injection Xi est sensiblement parallèle à la paroi latérale du portoir 36, le liquide, lors de l'injection, est déversé sur une partie souple du sac S (cette partie du sac n'étant pas en contact avec la paroi rigide du portoir 36). Un tel arrangement permet donc de réduire les éclaboussures durant la phase d'injection, contrairement à la solution de l'art antérieur où l'axe d'injection est perpendiculaire à la paroi latérale du portoir, le liquide étant alors déversé sur une partie du sac qui est en contact avec la paroi rigide du portoir.

Dans le présent exemple, l'enceinte 200 est munie d'une fenêtre (ou ouverture) latérale 210 autorisant l'accès des bras de l'opérateur au sein de l'enceinte 200 le long de l'axe du sac S. Une telle fenêtre (ou ouverture) 210 présente une hauteur et une largeur limitée pour éviter la sortie éventuelle de produits contaminants. Comme illustré sur les figures 5, 6 et 9, le plan P_{F}' de la fenêtre latérale 210 est perpendiculaire au plan d'accueil P_{A}'. Cette enceinte à fenêtre latérale présente l'avantage de faciliter grandement les manipulations de l'opérateur car elle permet un accès de part et d'autre des parois avant et arrière du sac S avec une plus grande liberté de mouvement. A noter toutefois que l'utilisation d'une enceinte protectrice standard, c'est-à-dire d'une enceinte à fenêtre frontale (comme l'enceinte 100 illustrée sur les figures 3 et 4), constituerait une alternative tout à fait envisageable avec ce deuxième mode de réalisation sans sortir du cadre de l'invention, quoi que moins optimale en termes d'espace de travail.

Le diluteur 11 comprend en outre un réceptacle 37 relié mécaniquement à l'organe sensible des moyens de pesée. Le réceptacle 37 s'étend au minimum sur la face supérieure du socle 20 et peut remplir la même fonction que le support 30 du diluteur 10. De manière optionnelle, pour faciliter la mise en place du portoir 36 et assurer son maintien, le diluteur 11 peut également comprendre une plaque de guidage 38 s'étendant au moins en partie sur la face supérieure du réceptacle 37 et conformée pour recevoir la partie inférieure du portoir 36.

La **figure 7** illustre une variante des moyens d'accueil équipant le diluteur 10 (conforme au premier mode de réalisation de l'invention). A la différence des figures 2 à 4, dans cet exemple, les moyens d'accueil comprennent un portoir 70. Ce portoir 70 est formé de deux parois latérales 70a et 70b et d'une paroi de fond 70c reliant les deux parois latérales, définissant un volume apte à accueillir le sac S dans une position d'ouverture sensiblement dans le plan P_{A} (le P_{A} correspondant alors au plan médian vertical compris entre les deux parois latérales du portoir 70). Les dimensions du portoir 70 sont adaptées aux dimensions du sac d'échantillonnage utilisé. Dans le présent exemple, la configuration du diluteur 10 est particulièrement bien adaptée à l'utilisation de sacs « grand format ».

La **figure 8** est une vue de dessus du diluteur 10 décrit plus haut en relation avec les figures 2, 3, 4, alors que la **figure 9** est une vue de dessus du diluteur 11 décrit plus haut en relation avec les figures 5 et 6. Le plan P_{F} représente le plan de la fenêtre d'accès frontale d'une enceinte standard. Les plans P_{A} et P_{A}' représentent les plans d'accueil du sac d'échantillonnage respectivement des premier et deuxième modes de réalisation du dispositif selon l'invention. L'opérateur OP est représenté par une icône noire. De ce point de vue, à l'instar du format d'une photo ou d'une image, le diluteur 10 est configuré selon un mode « portrait » (figure 8), le plan d'accueil P_{A} étant perpendiculaire au plan de la fenêtre P_{F}. Quant au diluteur 11, il est configuré selon un mode « paysage » (figure 9).

La **figure 9** présente, sous forme d'un organigramme, le procédé selon un mode de réalisation particulier de l'invention. Le procédé est mis en oeuvre au moyen du diluteur gravimétrique 10 dont le principe est décrit plus haut en relation avec les figures 2, 3, 4.

A l'étape S100, l'opérateur place un sac d'échantillonnage stérile, de type grand format, via la fenêtre d'accès 110 de l'enceinte protectrice 100, dans le plan médian vertical des moyens d'accueil du diluteur 10. L'opérateur réalise alors par déformation élastique un pincement des extrémités libres de la pince 35 pour faire adhérer les parois avant et arrière du sac S à la matière adhésive, relâche ces extrémités libres de sorte qu'elles retournent dans leur position de repos, maintenant le sac d'échantillonnage ouvert. Le sac d'échantillonnage est disposé telle que l'ouverture de remplissage O est positionnée vers le haut et l'axe du sac S perpendiculaire au plan de la fenêtre 110. Bien que le sac S présente un certain volume dans l'enceinte 100, du fait de la configuration astucieuse du diluteur 10 dont le principe a été décrit plus haut, la mise en place du sac S et son accès est relativement aisé malgré son volume. Par mesure de précaution et commodité, l'opérateur basculera les moyens d'injection 40 (via les éléments 60a et 60b, 50) en arrière de l'afficheur tête-haute 90 de façon à éloigner les moyens d'injection 40 de l'espace de travail pendant la préparation de l'opération de dilution.

A l'étape S200, l'opérateur déverse un échantillon solide de 375g issu d'un produit agroalimentaire dans le sac S par l'ouverture O. Pendant que l'échantillon est déversé dans le sac S, le diluteur 10 réalise une pesée en continue du sac S. L'afficheur tête-haute 90 affiche en temps réel la masse contenue dans le sac S.

A l'étape S300, une fois l'échantillon déversé dans le sac S, l'opérateur rebascule l'ensemble les moyens d'injection 40 en avant de l'afficheur tête-haute 90 et oriente la buse d'injection 40 selon les axes Xv et Xh de sorte que l'axe d'injection Xi soit dirigé vers la partie souhaitée du sac S (le bord latéral S1 du sac S en l'occurrence).

A l'étape S400, l'opérateur procède à l'injection d'une quantité prédéterminée de liquide de dilution dans le sac S suivant l'axe d'injection Xi. La quantité de liquide est calculée en fonction de la masse d'échantillon solide introduite dans le sac S. Par exemple, pour 375g d'échantillon, une quantité précise de 0,3 L de liquide est déversée dans le sac S. L'axe d'injection Xi étant orienté en direction du bord latéral S1 du sac S, le liquide injecté par les moyens d'injection 40 se déverse sensiblement sur le bord latéral S1 du sac S avec une vitesse de distribution du liquide pouvant être comprise typiquement entre 0,1 et 6,0 L/min.

Une fois la quantité prédéterminée de liquide versée, le diluteur 10 stoppe instantanément la distribution de liquide et l'opération de dilution prend fin. L'opérateur peut ainsi refermer le sac d'échantillonnage et le retirer de l'enceinte 100 sans difficultés particulières.

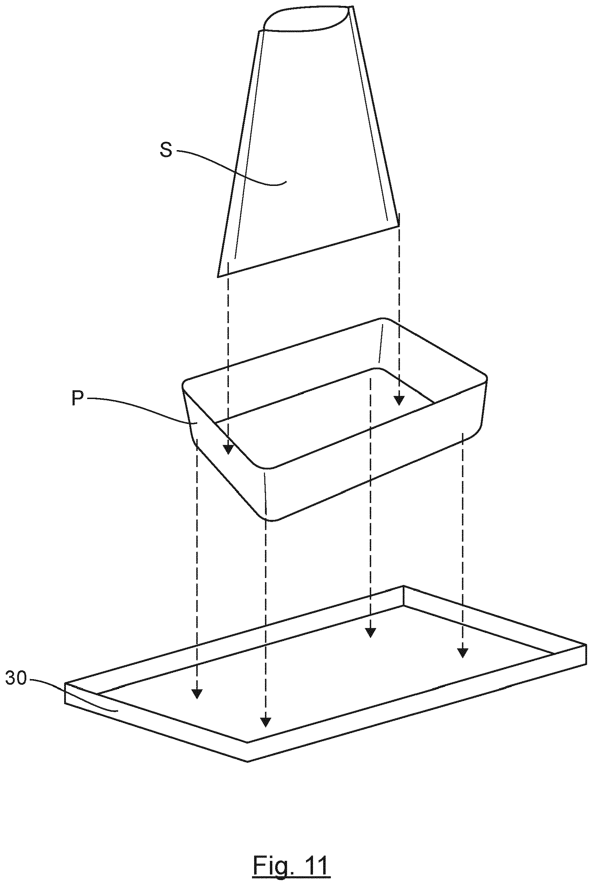

On présente maintenant, en relation avec la **figure 11****,** un exemple d'utilisation d'un panier de transport P dans le cadre du premier mode de réalisation de l'invention. Cette caractéristique est particulièrement intéressant notamment d'un point de vue praticité, puisqu'il a pour rôle de faciliter le transport du sac S, avant et après la phase de dilution. Un tel panier est constitué d'un corps comprenant une paroi de fond et quatre parois latérales.

Dans le cadre du premier mode de réalisation, le panier est conformé de manière à pouvoir accueillir le sac seul

Dans le cadre du deuxième mode de réalisation, le panier P est conformé de manière à pouvoir accueillir le portoir, lui-même accueillant le sac S. En d'autres le panier P est configuré pour transporter le contenant via le portoir

Le panier est dimensionné en fonction des dimensions du sac à transporter, mais également en fonction des dimensions de la fenêtre de l'enceinte dans lequel se trouve le diluteur (et notamment la hauteur des parois latérales de celui-ci) afin de conserver un volume de travail relativement confortable pour l'opérateur à travers la fenêtre d'accès, tout en permettant un transport aisé du sac hors de l'enceinte. Comme illustré sur la figure, le panier P étant destiné à être placé sur la paroi de fond du réceptacle 30, le réceptacle 30 et le panier P sont donc conformés pour que la paroi du fond du réceptacle 30 définisse une surface apte à recevoir la paroi du fond du panier P.

## Revendications

1. Dispositif de dilution gravimétrique (10) d'un échantillon dans un contenant (S) avec une quantité prédéterminée de liquide, ledit dispositif comprenant
- le contenant comprenant deux parois assemblées par des bords latéraux opposés (S1, S2), un fond et une ouverture de remplissage ;
- des moyens d'accueil (30 ; 35) du contenant définissant un volume accueillant le contenant dans une position d'ouverture ;
- des moyens d'injection (40) configurés pour injecter le liquide dans le contenant accueilli par les moyens d'accueil, les moyens d'injection ayant un axe d'injection dirigé vers l'ouverture de remplissage ;
ledit dispositif étant **caractérisé en ce que** les moyens d'injection sont agencés par rapport aux moyens d'accueil de sorte qu'au cours d'une injection du liquide dans le contenant, ledit axe d'injection est dirigé vers l'un des bords latéraux du contenant de telle sorte que le liquide se déverse sur ledit bord latéral du contenant.

2. Dispositif selon la revendication 1, dans lequel les moyens d'injection sont configurés mobiles en rotation par rapport à un organe de support selon au moins deux axes orthogonaux.

3. Dispositif selon l'une quelconque des revendications 1 et 2, ledit dispositif étant destiné à être logé sous une enceinte protectrice (100), ladite enceinte protectrice étant dotée d'une fenêtre d'accès (110) définissant un plan de fenêtre (P_{F}), et dans lequel lesdits moyens d'accueil définissent un plan d'accueil (P_{A}) dans lequel les bords latéraux du contenant sont destinés se trouver sensiblement de sorte que le plan d'accueil est perpendiculaire au plan de fenêtre.

4. Dispositif selon l'une quelconque des revendications 1 à 3, ladite fenêtre d'accès est une fenêtre d'accès frontale.

5. Dispositif selon l'une quelconque des revendications 1 à 4, dans lequel les moyens d'accueil comprennent un réceptacle (30) apte à supporter le contenant et une pince d'ouverture (35) apte à maintenir le contenant dans la position d'ouverture.

6. Dispositif selon la revendication 5, dans lequel la pince d'ouverture est solidaire du réceptacle.

7. Dispositif selon l'une quelconque des revendications 1 à 4, dans lequel les moyens d'accueil comprennent un portoir (36) apte à accueillir le contenant et un réceptacle apte à recevoir ledit portoir, ledit portoir étant formé de deux parois latérales et d'une paroi de fond reliant les deux parois latérales, lesdites parois verticales étant conformées pour maintenir le contenant dans la position d'ouverture.

8. Dispositif selon l'une quelconque des revendications 5 à 7, comprenant un panier de transport amovible conformé pour transporter ledit contenant, ledit panier étant destiné à être placé sur une paroi de fond du réceptacle.

9. Dispositif selon l'une quelconque des revendications 1 à 8, comprenant un mat télescopique à l'extrémité duquel est fixé un afficheur tête-haute et des moyens de commande dudit mat télescopique configurés pour modifier la position de l'afficheur tête-haute selon un axe vertical, ledit afficheur tête-haute étant mécaniquement relié aux moyens d'injection via l'organe de support.

10. Procédé de dilution gravimétrique d'un échantillon dans un contenant (S) avec une quantité prédéterminée de liquide à l'aide d'un dispositif de dilution (10), le contenant comprenant deux parois assemblées par des bords latéraux opposés (S1, S2), un fond et une ouverture de remplissage, le procédé comprenant les étapes suivantes :
- disposer (S100) le contenant dans une position d'ouverture via des moyens d'accueil ;
- verser (S200) ledit échantillon dans le contenant à travers l'ouverture de remplissage ;
- injecter (S400) le liquide dans le contenant via des moyens d'injection, lesdits moyens d'injection ayant un axe d'injection dirigé vers l'ouverture de remplissage ;
ledit procédé étant **caractérisé en ce que** il comprend une étape, effectuée préalablement à l'étape d'injection, consistant à diriger (S300) l'axe d'injection desdits moyens d'injection vers l'un des bords latéraux du contenant de sorte que les moyens d'injection injectent le liquide sur ledit bord latéral du contenant.

## Patentansprüche

1. Vorrichtung (10) zur gravimetrischen Verdünnung einer Probe in einem Behälter (S) mit einer vorbestimmten Menge an Flüssigkeit, wobei die Vorrichtung umfasst:
- den Behälter mit zwei Wänden, die durch gegenüberliegende Seitenkanten (S1, S2) zusammengefügt sind, einem Boden und einer Einfüllöffnung;
- Aufnahmemittel (30; 35) für den Behälter, die ein Volumen definieren, welches den Behälter in einer geöffneten Position aufnimmt;
- Injektionsmittel (40), die dazu eingerichtet sind, die Flüssigkeit in den von den Aufnahmemitteln aufgenommenen Behälter zu injizieren, wobei die Injektionsmittel eine Injektionsachse besitzen, die in Richtung der Einfüllöffnung gerichtet ist;
wobei die Vorrichtung **dadurch gekennzeichnet ist, dass** die Injektionsmittel in Bezug auf die Aufnahmemittel so angeordnet sind, dass während einer Injektion der Flüssigkeit in den Behälter die Injektionsachse derart auf einen der Seitenränder des Behälters gerichtet ist, dass die Flüssigkeit über den Seitenrand des Behälters fließt.

2. Vorrichtung nach Anspruch 1, bei der die Injektionsmittel relativ zu einem Stützorgan um mindestens zwei orthogonale Achsen drehbar eingerichtet sind.

3. Vorrichtung nach einem der Ansprüche 1 oder 2, wobei die Vorrichtung dazu bestimmt ist, unter einer Schutzhülle (100) untergebracht zu werden, wobei die Schutzhülle mit einem Zugangsfenster (110) versehen ist, das eine Fensterebene (P_{F}) definiert, und wobei die Aufnahmemittel eine Aufnahmeebene (P_{A}) definieren, in der die Seitenkanten des Behälters im Wesentlichen so liegen sollen, dass die Aufnahmeebene senkrecht zur Fensterebene liegt.

4. Vorrichtung nach einem der Ansprüche 1 bis 3, wobei das Zugangsfenster ein frontales Zugangsfenster ist.

5. Vorrichtung nach einem der Ansprüche 1 bis 4, wobei die Aufnahmemittel eine Aufnahme (30) zum Tragen des Behälters, und eine Öffnungsklammer (35) zum Halten des Behälters in der Öffnungsposition umfassen.

6. Vorrichtung nach Anspruch 5, bei der die Öffnungsklammer fest mit dem Behältnis verbunden ist.

7. Vorrichtung nach einem der Ansprüche 1 bis 4, bei der die Aufnahmemittel ein Gestell (36) zum Aufnahmen des Behälters, und ein Behältnis, zum Aufnahmen des Gestells umfassen, wobei das Gestell aus zwei Seitenwänden und einer Bodenwand, die die beiden Seitenwände verbindet, gebildet wird, wobei die senkrechten Wände so gestaltet sind, dass sie den Behälter in der geöffneten Position halten.

8. Vorrichtung nach einem der Ansprüche 5 bis 7, mit einem abnehmbaren Transportkorb, der zum Transport des Behälters gestaltet ist, wobei der Korb dazu bestimmt ist, an einer Bodenwand des Behälters angebracht zu werden.

9. Vorrichtung nach einem der Ansprüche 1 bis 8, mit einem Teleskopmast, an dessen Ende ein Head-Up-Display befestigt ist, und mit Steuermitteln für den Teleskopmast, die dazu eingerichtet sind, die Position des Head-Up-Displays entlang einer vertikalen Achse zu verändern, wobei das Head-Up-Display über das Stützorgan mechanisch mit den Injektionsmitteln verbunden ist.

10. Verfahren zum gravimetrischen Verdünnen einer Probe in einem Behälter (S) mit einer vorbestimmten Menge Flüssigkeit mit Hilfe einer Verdünnungsvorrichtung (10), wobei der Behälter zwei Wände, die durch gegenüberliegende Seitenkanten (SI, S2) zusammengefügt sind, einen Boden und eine Einfüllöffnung umfasst, wobei das Verfahren die folgenden Schritte umfasst:
- Anordnen (S100) des Behälters in einer Öffnungsposition mittels Aufnahmemitteln;
- Gießen (S200) der Probe in den Behälter durch die Einfüllöffnung hindurch;
- Injizieren (S400) der Flüssigkeit in den Behälter mittels Injektionsmitteln, wobei die Injektionsmittel eine Injektionsachse haben, die auf die Einfüllöffnung gerichtet ist;
wobei das Verfahren **dadurch gekennzeichnet ist, dass** es einen Schritt umfasst, der vor dem Injektionsschritt durchgeführt wird und darin besteht, die Injektionsachse der Injektionsmittel derart auf einen der Seitenränder des Behälters zu richten (S300), dass die Injektionsmittel die Flüssigkeit auf den Seitenrand des Behälters injizieren.

## Claims

1. Device for gravimetric dilution (10) of a sample in a container (S) with a predetermined amount of liquid, said device comprising:
- the container comprising two walls assembled by opposite side edges (S1, S2), a bottom and a filling opening;
- means (30; 35) for receiving the container defining a volume receiving the container in an open position;
- injection means (40) configured to inject the liquid into the container received by the receiving means, the injection means having an injection axis directed towards the filling opening;
said device being **characterised in that** the injection means are arranged relative to the receiving means so that during an injection of the liquid into the container, said injection axis is directed towards one of the side edges of the container so that the liquid spills onto said side edge of the container.

2. Device according to claim 1, wherein the injection means are configured movable in rotation relative to a support member along at least two orthogonal axes.

3. Device according to any one of claims 1 and 2, said device being intended to be housed under a protective enclosure (100), said protective enclosure being provided with an access window (110) defining a window plane (P_{F}), and wherein said reception means define a reception plane (P_{A}) wherein the side edges of the container are intended to be located substantially so that the reception plane is perpendicular to the window plane.

4. The device according to any one of claims 1 to 3, said access window is a front access window.

5. Device according to any one of claims 1 to 4, wherein the reception means comprise a receptacle (30) capable of supporting the container and an opening clamp (35) capable of maintaining the container in the open position.

6. Device according to claim 5, wherein the opening clamp is integral with the receptacle.

7. Device according to any one of claims 1 to 4, wherein the reception means comprise a rack (36) capable of receiving the container and a receptacle capable of accommodating said rack, said rack being formed of two side walls and a bottom wall connecting the two side walls, said vertical walls being shaped to maintain the container in the open position.

8. Device according to any one of claims 5 to 7, comprising a removable transport basket shaped to transport said container, said basket being intended to be placed on a bottom wall of the receptacle.

9. Device according to any one of claims 1 to 8, comprising a telescopic mast at the end of which is fixed a head-up display and means for controlling said telescopic mast configured to modify the position of the head-up display along a vertical axis, said head-up display being mechanically connected to the injection means via the support member.

10. Method for gravimetric dilution of a sample in a container (S) with a predetermined amount of liquid using a dilution device (10), the container comprising two walls assembled by opposite side edges (S1, S2), a bottom and a filling opening, the method comprising the following steps:
- placing (S100) the container in an open position via reception means;
- pouring (S200) said sample into the container through the filling opening;
- injecting (S400) the liquid into the container via injection means, said injection means having an injection axis directed towards the filling opening;
said method being **characterised in that** it comprises a step, carried out prior to the injection step, consisting of directing (S300) the injection axis of said injection means towards one of the side edges of the container so that the injection means inject the liquid onto said side edge of the container.
